# EUROPÄISCHE PATENTSCHRIFT

(11) **EP 3 130 167 B1**
(45) Veröffentlichungstag und Bekanntmachung des Hinweises auf die Patenterteilung: **23.09.2020**
(21) Anmeldenummer: 15712587.3
(22) Anmeldetag: 20.03.2015
(51) Int. Cl.: H04W 12/08, H04W 12/06, H04L 29/06, G05B 19/418, H04L 29/08

(54) **VERFAHREN ZUM GESICHERTEN ZUGRIFF AUF EIN FELDGERÄT**
METHOD FOR THE SECURE ACCESS TO A FIELD DEVICE
PROCÉDÉ D'ACCÈS SÉCURISÉ À UN APPAREIL DE TERRAIN

(30) Priorität: 09.04.2014 DE 102014105076
(43) Veröffentlichungstag der Anmeldung: 15.02.2017
(73) Patentinhaber: Krohne Messtechnik GmbH, 47058 Duisburg (DE)
(72) Erfinder: SPIEGEL, Christoph, 46049 Oberhausen (DE); DABROWSKI, Markus, 47269 Duisburg (DE); KEIMLING, Rene, 47228 Duisburg (DE); HANSEN, Christian, 45529 Hattingen (DE)
(74) Vertreter: Gesthuysen Patent- und Rechtsanwälte
(86) Internationale Anmeldenummer: PCT/EP2015/055912
(87) Internationale Veröffentlichungsnummer: WO 2015/154967

(56) Entgegenhaltungen:
- EP-A2- 2 579 116
- DE-A1-102012 109 348
- US-A1- 2009 048 853
- US-A1- 2011 245 932

## Beschreibung

Die Erfindung betrifft ein Verfahren zum gesicherten Zugriff mindestens einer mobilen Bedieneinheit auf mindestens ein Feldgerät,wobei mindestens zwischen der mobilen Bedieneinheit und dem Feldgerät eine Verbindung zur Übertragung von Daten aufgebaut wird, wobei Zugangsdaten für einen Zugriff der mobilen Bedieneinheit auf das Feldgerät übermittelt werden, wobei ein Vergleich zwischen den Zugangsdaten und hinterlegten Vergleichsdaten vorgenommen und ein Vergleichsergebnis erzeugt wird, wobei ausgehend von dem Vergleichsergebnis der Zugriff der mobilen Bedieneinheit auf das Feldgerät erlaubt wird, wobei für einen Zugriff auf das Feldgerät dem Feldgerät mindestens ein Zugriffs-Code zugeordnet und zumindest als Teil der Vergleichsdaten hinterlegt wird, wobei der mobilen Bedieneinheit ein Identifizierungs-Code zugeordnet und zumindest als Teil der Vergleichsdaten hinterlegt wird, und wobei der Identifizierungs-Code zumindest als Teil der Zugangsdaten übermittelt wird.

In der modernen Prozessautomatisierung ist es üblich, Prozesse oder Medien durch Messungen mit Messgeräten zu überwachen oder durch Steuerglieder zu beeinflussen. Solche Feldgeräte - also Messgeräte bzw. Sensoren und Steuerglieder bzw. Aktoren - sind dabei zumeist über sogenannte Feldbusse mit Leitwarten verbunden.

Für die direkte Kontaktierung der Feldgeräte vor Ort verfügen die Feldgeräte teilweise über sogenannte Bedien- und Anzeigeeinheiten zur Darstellung von Information sowie zur Eingabe oder Auswahl von Daten. Alternativ gibt es besondere Schnittstellen, die einen direkten Anschluss einer insbesondere mobilen Bedieneinheit an das Feldgerät erlauben. Dies sind beispielsweise sogenannte Service-Schnittstellen. Manche Feldgeräte verfügen auch über Funkschnittstellen, die teilweise fester Bestandteil des Feldgeräts oder über einen Adapter dem Feldgerät hinzugefügt sind.

Für den Zugriff auf die Feldgeräte sind sogenannte Handhelds in Benutzung. Diese sind in der Regel besonders entwickelt, um im Bereich der Industrie-Anwendung und besonders der Prozessautomatisierung angewendet werden zu können.

Diese mobilen - also weitgehend tragbaren - Handgeräte erlauben teilweise eine unmittelbare Verbindung direkt mit einem Feldgerät oder sie können mit dem jeweiligen Feldbus verbunden werden, um über diese Verbindung auf das Feldgerät einzuwirken oder beispielsweise Daten auszulesen.

Unter mobiler Bedieneinheit sei im Folgenden jede Art von tragbarer oder transportierbarer Einheit verstanden, die eine Eingabe von Daten oder Informationen, eine Auswahl zwischen Alternativen, eine Anzeige von Daten oder Abläufen oder eine andere Art der Realisierung der Mensch-Maschine-Kommunikation - hier insbesondere mit einem Feldgerät - erlaubt.

Insofern es bei einem Feldgerät möglich ist, direkt darauf zuzugreifen, so muss verhindert werden, dass es zu einem nicht autorisierten Zugriff kommt.

Da über Feldgeräte Prozesse gesteuert und überwacht werden, muss zum einen diese Funktion gewährleistet werden und zum anderen können sich aus den Prozessen auch wertvolle Informationen gewinnen lassen. Daher muss zum einen verhindert werden, dass die Steuerung der Prozesse bzw. deren Messungen gestört werden, z. B. durch das Setzen von falschen Parametern oder das Verändern der Software. Zum anderen dürfen auch keine Daten an Unbefugte gelangen, die beispielsweise Auskünfte über Rezepturen usw. geben könnten.

Dazu zeigt die US 2009/048853 A1 ein Verfahren zum gesicherten Zugriff einer Bedieneinheit auf Steuereinheiten wie zum Beispiel Feldgeräten. Die gegenseitige Verifizierung der betroffenen Einheiten erfolgt mittels Zertifikaten, die die beteiligten Einheiten jeweils untereinander austauschen. In der Praxis kann sich ein Techniker über die Bedieneinheit nach Verifikation mit dem Feldgerät verbinden und einen Service durchführen.

Die DE 10 2012 109 348 zeigt ein Verfahren zum Bedienen eines Feldgerätes der Automatisierungstechnik. Das Feldgerät ist über eine Kommunikationsschnittstelle bedienbar, wobei sich ein Bediener über ein Passwort anmeldet. Dem Passwort wird eine Benutzerrolle zugeordnet, wobei die Benutzerrolle die Zugriffsrechte auf Parameter des Feldgeräts bestimmt.

Die US 2011/0245932 A1 offenbart ein Verfahren zum Betreiben eines Feldgerätes, wobei ein mobiles Bedienelement genutzt wird, um sich an dem Feldgerät anzumelden.

Die EP 2 579 116 A2 offenbart ein Verfahren zur Sicherstellung des autorisierten Zugriffs auf ein Feldgerät der Automatisierungstechnik. Dazu wird vor Auslieferung des Feldgeräts ein individueller Zugangscode für einen autorisierten Feldgeräte Nutzer im dem Feldgerät hinterlegt. Der individuelle Zugangscode wird mit einer mobilen Serviceeinheit über eine Schnittstelle für die Nahfeldkommunikation ausgelesen. Mit einer Sicherheitsapplikation wird eine Zugriffsberechtigung für das Feldgerät für einen autorisierten Benutzer eingerichtet, wobei die Benutzung des Feldgeräts durch den autorisierten Benutzer ensprechend der eingerichteten Zugriffsberechtigung erfolgt.

Der Erfindung liegt die Aufgabe zugrunde, ein Verfahren für den gesicherten Zugriff einer mobilen Bedieneinheit auf ein Feldgerät vorzuschlagen, wobei insbesondere das Feldgerät vor einem unautorisierten Zugriff über eine mobile Bedieneinheit geschützt ist.

Das erfindungsgemäße Verfahren, bei dem die zuvor hergeleitete und aufgezeigte Aufgabe gelöst ist, ist zunächst und im Wesentlichen dadurch gekennzeichnet, dass der Identifizierungs-Code in dem Fall zumindest als Teil der Vergleichsdaten hinterlegt wird, dass das Vergleichsergebnis, das für den Vergleich zwischen von der mobilen Bedieneinheit übermittelten Zugangsdaten und dem hinterlegten Zugriffs-Code erzeugt worden ist, positiv ist, und dass bei einem erneuten Zugriff nur der Identifizierungs-Code von der mobilen Bedieneinheit an das Feldgerät übermittelt wird.

Das erfindungsgemäße Verfahren ermöglicht daher einen gesicherten Zugriff, den ein Feldgerät einer mobilen Bedieneinheit gewährt, so dass die mobile Bedieneinheit auf das Feldgerät zugreifen kann. Das Verfahren kann daher auch verstanden werden als Verfahren zur gesicherten Einleitung oder Aufnahme eines Datenverkehrs zwischen einer mobilen Bedieneinheit und einem Feldgerät.

Die Übermittlung der Zugangsdaten erfolgt dabei in einer Ausgestaltung an das Feldgerät und auch der Vergleich zwischen den übermittelten Zugangsdaten und den hinterlegten Vergleichsdaten erfolgt im Feldgerät.

Die Art der Zugangsdaten bzw. der entsprechend hinterlegten Daten wird in den folgenden Ausgestaltungen näher beschrieben.

Erfindungsgemäß wird für einen Zugriff auf das Feldgerät dem Feldgerät mindestens ein Zugriffs-Code zugeordnet und zumindest als Teil der Vergleichsdaten hinterlegt. In dieser Ausgestaltung wird dem Feldgerät ein Code - vorzugsweise in Form einer alphanumerischen Zeichenkette - zugeordnet und hinterlegt. Die Hinterlegung erfolgt dabei in einer Ausgestaltung vorzugsweise im Feldgerät selbst.

Wird daher bei der Anbahnung eines Zugriffs auf das Feldgerät von der mobilen Bedieneinheit die richtige Zeichenfolge als Zugangsdaten bzw. ggf. genauer als Zugangsdatum übermittelt, so erkennt das Feldgerät, dass der Zugriff von einer autorisierten Person versucht wird und daher vorzugsweise gewährbar ist.

Erfindungsgemäß ist vorgesehen, dass der mobilen Bedieneinheit ein Identifizierungs-Code zugeordnet und zumindest als Teil der Vergleichsdaten hinterlegt wird. Dieser Identifizierungs-Code wird zumindest als Teil der Zugangsdaten - beispielsweise zum Feldgerät - übermittelt. Zudem wird der Vergleich mindestens zwischen dem Identifizierungs-Code und hinterlegten Vergleichsdaten vorgenommen und ein Vergleichsergebnis erzeugt.

Erfindungsgemäß ist die mobile Bedieneinheit durch den Identifizierungs-Code gekennzeichnet und kann sich quasi dadurch ausweisen. Für den Zugriff wird dann entweder nur der Identifizierungs-Code oder der Identifizierungs-Code beispielsweise in Verbindung mit dem Zugriffs-Code benutzt, um das Vergleichsergebnis zu erzeugen.

Dies hat den Vorteil, dass so eine zugriffs-berechtige mobile Bedieneinheit als solche erkannt werden kann. Daher ist es entweder ausreichend, eine zugriffsberechtigte mobile Bedieneinheit zu verwenden, ohne dass auch der Zugriffs-Code des Feldgerätes übermittelt wird. Dies erlaubt auch den Zugriff auf Feldgeräte, für die der jeweilige Zugriffs-Code nicht bekannt ist, indem eine solche mobile Bedieneinheit, deren Identifizierungs-Code entsprechend hinterlegt ist, benutzt wird.

In einer alternativen Ausgestaltung ist allein der Zugriffs-Code des Feldgeräts nicht ausreichend, sondern es kann nur der Zugriff über eine entsprechend bekannte mobile Bedieneinheit erfolgen.

Die Hinterlegung des Identifizierungs-Codes zumindest als Teil der Vergleichsdaten und daher quasi die Eintragung der mobilen Bedieneinheit in eine Liste der vertrauenswürdigen Bedieneinheiten findet in einer Ausgestaltung in dem Fall statt, dass ein für den Vergleich zwischen von der mobilen Bedieneinheit übermittelten Zugangsdaten und dem hinterlegten Zugriffs-Code erzeugtes Vergleichsergebnis positiv ist.

Der erste Kontakt zwischen der mobilen Bedieneinheit und dem Feldgerät findet also über den Zugriffs-Code statt und davon ausgehend wird der Identifizierungs-Code der mobilen Bedieneinheit - im Vergleich der Übereinstimmung - in den Vergleichsdaten abgespeichert.

Die Vorgabe des Zugriffs-Codes zum Feldgerät erfolgt in einer Ausgestaltung werkseitig bei der Fertigung des Feldgerätes.

In einer alternativen Ausgestaltung wird der Zugriffs-Code - insbesondere bei der ersten Inbetriebnahme nach der Installation des Feldgeräts - am Feldgerät selbst, z. B. über eine entsprechende Eingabeeinheit eingegeben.

In einer weiteren Ausgestaltung erfolgt die Zuordnung des Zugriffs-Codes über eine Eingabe an der mobilen Bedieneinheit, d. h. die entsprechende Zeichenkette wird über die mobile Bedieneinheit eingegeben und dann entsprechend hinterlegt. In dieser Ausgestaltung benötigt das Feldgerät kein eigenes Human-Machine-Interface.

In der Regel befindet sich in einer Prozessanlage eine Mehrzahl von Feldgeräten.

Daher sieht es eine Ausgestaltung vor, dass in der mobilen Bedieneinheit Zugriffs-Codes von mindestens zwei Feldgeräten hinterlegt werden. Die mobile Bedieneinheit verfügt damit über die Möglichkeit, auf wenigstens zwei Feldgeräte über den jeweiligen Zugriffs-Code zuzugreifen.

Eine damit einhergehende Ausgestaltung beinhaltet, dass von der mobilen Bedieneinheit die in ihr hinterlegten Zugriffs-Codes mit einer anderen mobilen Bedieneinheit geteilt werden.

Eine erste Bedieneinheit erlaubt daher in dieser Ausgestaltung einer zweiten Bedieneinheit den Zugriff auf ihre Zugriffs-Codes, so dass auch die zweite Bedieneinheit auf die mindestens zwei Feldgeräte zugreifen kann. Dieses Teilen oder der Share-Prozess wird in einer Ausgestaltung direkt zwischen den beiden mobilen Bedieneinheiten realisiert und erfolgt in einer weiteren Ausgestaltung über eine Verwaltungsvorrichtung, z. B. in Form eines Servers.

Bei diesem Austausch von Zugriffs-Codes ist in einer Ausgestaltung zusätzlich vorgesehen, dass auch die Identifizierungs-Codes der Bedieneinheiten für den erlaubten Zugriff auf die Feldgeräte verwendet und entsprechend abgefragt werden.

In einer Ausgestaltung sind in einem Feldgerät Identifizierungs-Codes von mindestens zwei mobilen Bedieneinheiten hinterlegt, so dass vorzugsweise auch die wenigstens zwei mobilen Bedieneinheiten Zugriff auf das Feldgerät erhalten können.

In einer damit verbundenen Ausgestaltung ist vorgehen, dass das Feldgerät die in ihr hinterlegten Identifizierungs-Codes mit einem anderen Feldgerät teilt.

In einer weiteren Ausgestaltung werden auch Identifizierungs-Codes von mobilen Bedieneinheiten hinterlegt, denen kein Zugriff gewährt werden darf. In dieser Ausgestaltung umfassen die hinterlegten Daten daher auch Ausschluss-Listen.

Für den Umgang mit dem Zugriffs-Code und die konkrete Abwicklung des Zugriffs der mobilen Bedieneinheit auf das jeweilige Feldgerät ist in einer Ausgestaltung vorgesehen, dass die für den Zugriff auf das Feldgerät zu übermittelnden Zugangsdaten an der mobilen Bedieneinheit eingegeben werden.

In dieser Ausgestaltung wird also von der Bedienperson direkt an der mobilen Bedieneinheit - z. B. über eine reale oder virtuelle Tastatur - beispielweise die Zeichenkette eingegeben, die dann als Zugangsdaten an das Feldgerät übermittelt werden. Die Person gibt also beispielsweise den Zugriffs-Code des Feldgeräts ein und diese Eingabe wird mit dem Identifizierungs-Codes zusammen als Zugangsdaten an das Feldgerät übermittelt.

In einer alternativen Ausgestaltung werden die - insbesondere von der mobilen Bedieneinheit - zu übermittelnden Zugangsdaten aus einer Menge von - insbesondere in der mobilen Bedieneinheit - hinterlegten Zugangsdaten entnommen.

Die mobile Bedieneinheit verfügt daher in einer Ausgestaltung über eine Sammlung von Zugangsdaten, die den Zugriff auf unterschiedliche Feldgeräte erlauben. Für den konkreten Zugriff werden die Daten entweder von der Bedienperson aus einer Liste ausgewählt oder die mobile Bedieneinheit verwendet automatisch und selbstständig einen entsprechenden Satz an Zugangsdaten.

In einer Ausgestaltung ermittelt die mobile Bedieneinheit diejenigen Feldgeräte oder auch anderen mobilen Bedieneinheiten, die sich im gleichen Kommunikationsnetz befinden. Insbesondere für die Feldgeräte, auf die von der mobilen Bedieneinheit ein Zugriff grundlegend erfolgen kann, fragt dann die mobile Bedieneinheit - vorzugsweise, wenn sie nicht über alle erforderlichen Zugangsdaten selbst verfügt - bei einer anderen mobilen Bedieneinheit und/oder bei einer Verwaltungsvorrichtung die erforderlichen Zugriffs-Codes der ermittelten Feldgeräte ab.

Dabei ist generell in einer Ausgestaltung eine Verwaltungsvorrichtung - z. B. ein Server mit mindestens einer entsprechenden Kommunikationsschnittstelle - vorgesehen, über den das Hinterlegen und/oder das Teilen von solchen Zugangsdaten wie den Zugriffs- und/oder Identifizierungs-Codes vorgenommen wird. Alternativ oder ergänzend dient die Verwaltungsvorrichtung zumindest teilweise oder vollständig dem Vergleich von Zugangsdaten mit hinterlegten Vergleichsdaten.

Schließlich sieht es eine Ausgestaltung vor, dass Daten zumindest zwischen der mobilen Bedieneinheit und dem Feldgerät zumindest teilweise verschlüsselt ausgetauscht werden.

Im Einzelnen gibt es nun eine Vielzahl von Möglichkeiten, das erfindungsgemäße Verfahren auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: eine schematische Darstellung eines Zugriffs einer mobilen Bedieneinheit auf ein Feldgerät,
- Fig. 2: ein Ablaufdiagramm für eine erste Variante eines gesicherten Zugriffs einer mobilen Bedieneinheit auf ein Feldgerät,
- Fig. 3: ein Ablaufdiagramm für eine zweite Variante eines gesicherten Zugriffs einer mobilen Bedieneinheit auf ein Feldgerät
- Fig. 4: ein Ablaufdiagramm für eine dritte Variante eines gesicherten Zugriffs einer mobilen Bedieneinheit auf ein Feldgerät
- Fig. 5: ein Ablaufdiagramm für eine vierte Variante eines gesicherten Zugriffs einer mobilen Bedieneinheit auf ein Feldgerät und
- Fig. 6: eine Konstellation für einen gesicherten Zugriff mit zwei Bedieneinheiten und zwei Feldgeräten.

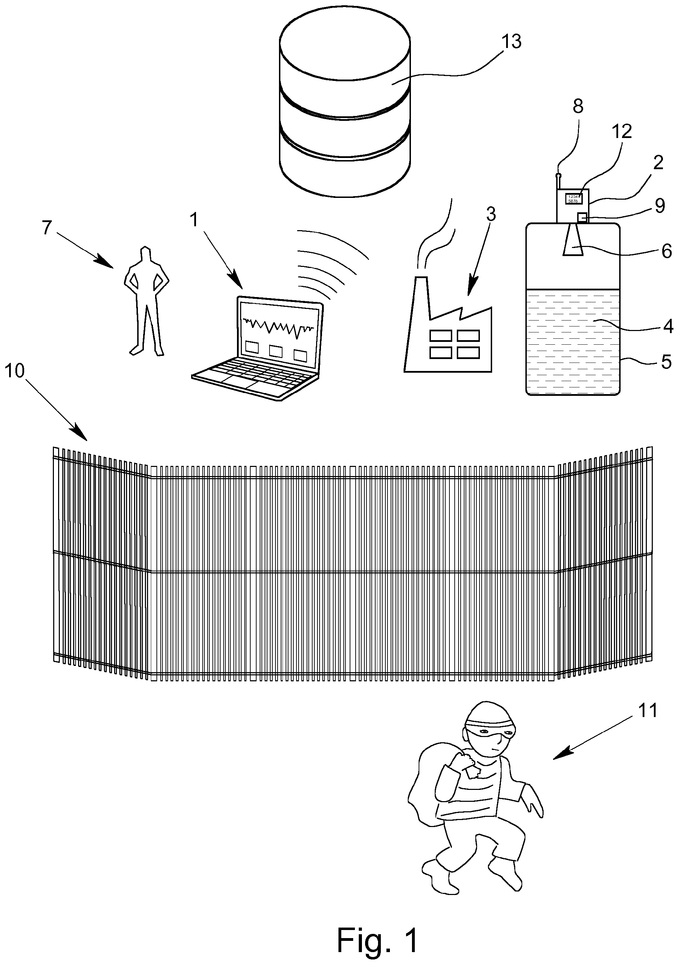

In der Fig. 1 ist ein Beispiel für einen gesicherten Zugriff einer mobilen Bedieneinheit 1 auf ein Feldgerät 2 dargestellt. Der Zugriff, der auch als Authenfizierung der mobilen Bedieneinheit 1 gegenüber dem Feldgerät 2 bezeichnet werden kann, findet dabei innerhalb einer Prozessanlage 3 statt.

Das Feldgerät 2 ist hier ein Messgerät zur Bestimmung des Füllstands eines Mediums 4 in einem Behälter 5.

Die Messung erfolgt in dem dargestellten Ausführungsbeispiel nach dem Radar-Prinzip, wobei für das Senden und Empfangen der elektromagnetischen Strahlung eine Antenne 6 vorgesehen ist.

Die Einbauposition des Feldgeräts 2 auf dem Behälter 5 macht die direkte Bedienung durch das Bedienpersonal 7 z. B. für das Einspielen von Software oder das Setzen von Parametern oder das Auslesen von Mess- oder Historiendaten schwierig.

Daher wird hier die mobile Bedieneinheit 1 in Form eines Laptops benutzt, das über Funk mit dem Feldgerät 2 bzw. spezieller über dessen - hier durch eine Extraantenne 8 angedeutete - Funkschnittstelle kommuniziert, d. h. insbesondere Daten austauscht.

Für die Datenkommunikation bringt die Bedienperson 7 ihre mobile Bedieneinheit 1 in die relative Nähe zum Feldgerät 2 und startet auf der mobilen Bedieneinheit 1 ein Anwendungsprogramm (z. B. in Form eines sogenannten App), das daraufhin über Funk Kontakt zum Feldgerät 2 aufnimmt.

Dabei überträgt die mobile Bedieneinheit 1 Zugangsdaten zum Feldgerät 2. Bei den Zugangsdaten handelt es sich insbesondere um den vorgebbaren Zugriffs-Code des Feldgeräts 2 und/oder um den spezifischen Identifizierungs-Code der mobilen Bedieneinheit 1 selbst.

Der Zugriffs-Code des Feldgeräts 2 wird dabei beispielsweise bei der Fertigung des Feldgeräts 2 oder bei der ersten Inbetriebnahme des Feldgeräts 2 im Prozess vorgegeben und insbesondere auch im Feldgerät 2 fest abgespeichert.

Die empfangenen Zugangsdaten werden wiederum vom Feldgerät 2 mit in einem Datenspeicher 9 hinterlegten Daten verglichen.

Ausgehend von dem Vergleich bzw. dem damit verbundenen Vergleichsergebnis wird der mobilen Bedieneinheit 1 der Zugang zum Feldgerät 2 gewährt oder verwehrt.

Die Eingabe bzw. Übermittlung der Zugangsdaten und deren Abgleich mit hinterlegten Daten - unabhängig davon, ob es sich um den speziellen Zugangs-Code des Feldgeräts 2 oder um den Identifizierungs-Code (gewissermaßen die ID) der mobilen Bedieneinheit 1 handelt - regelt den Zugriff zum Feldgerät 2 und stellt damit eine interne Erweiterung eines Zaunes 10 dar, wie er hier rein symbolhaft um das Areal der Prozessanlage 3 verläuft und wie er physisch ein unberechtigtes Eindringen verhindert.

Um den Zugriff der zuverlässigen mobilen Bedieneinheiten 1 auf die Feldgeräte 2 zu erleichtern, wird insbesondere nach einem erfolgreichen Zugriff der Identifizierungs-Code der jeweiligen mobilen Bedieneinheit im Feldgerät abgespeichert. Das bedeutet, dass bei einer erneuten Kontaktaufnahme die mobile Bedieneinheit lediglich ihren Identifizierungs-Code an das Feldgerät übermitteln muss und sogleich vom Feldgerät aufgrund der hinterlegten Daten als vertrauenswürdig erkannt und der Zugriff erlaubt wird.

Sollte daher ein potentieller Datendieb 11 einen Zugriff auf das Feldgerät 2 versuchen, so wird er scheitern, weil er zum einen nicht über den spezifischen Zugriffs-Code des Feldgeräts 2 verfügt bzw. weil er keine mobile Bedieneinheit 1 verwendet, die bereits einmal einen autorisierten Datenaustausch mit dem Feldgerät 2 durchgeführt hat.

Für die Zuweisung des Zugriffs-Codes zum Feldgerät 2 durch den Benutzer 7 verfügt das Feldgerät 2 über eine Eingabevorrichtung 12, beispielsweise in Form einer Tastatur und vorzugsweise ebenfalls mit einer Anzeigevorrichtung. Die Eingabevorrichtung 12 wird im Stand der Technik auch als Human-Machine-Interface (HMI) bezeichnet.

Bei der Erstinstallation wird der spezifische Zugriffs-Code über die EingabeVorrichtung 12 eingegeben und dann in dem Datenspeicher 9 fest hinterlegt.

Die Eingabevorrichtung 12 kann bei der Installation trotz der umständlichen Einbauposition direkt benutzt werden, da bei der Installation sich die Bedienperson 7 üblicherweise in unmittelbarer Nähe des Feldgerätes 2 befindet.

Vorzugsweise ist eine Datenkommunikation über die Schnittstelle mit der Extraantenne 8 so lange blockiert, bis der Zugriffs-Code fest im Feldgerät 2 hinterlegt ist und damit auch eine gesicherte Datenübertragung gewährleistet werden kann.

Weiterhin ist noch eine Verwaltungsvorrichtung 13, z. B. in Form eines sogenannten Servers, vorgesehen.

Zu dieser Verwaltungsvorrichtung 13 überträgt das Feldgerät 2 nach jeweils einer erfolgreichen Zugriffsaktion den Identifizierungs-Code der jeweiligen mobilen Bedieneinheit 1. Dadurch baut sich durch die wirksame Identifizierung eine Datenbank an vertrauenswürdigen mobilen Bedieneinheiten 1 auf.

In den folgenden Diagrammen zur Verdeutlichung von unterschiedlichen Abläufen eines gesicherten Zugriffs auf ein Feldgerät sind jeweils im Wesentlichen gleichen Schritte mit dem gleichen Bezugszeichen versehen.

Die Übertragung der Daten zwischen der mobilen Bedieneinheit 1 und dem Feldgerät 2 findet insbesondere verschlüsselt statt. Die Kommunikation kann dabei insbesondere auch über weitere Zwischengeräte oder Zwischenstationen usw. erfolgen.

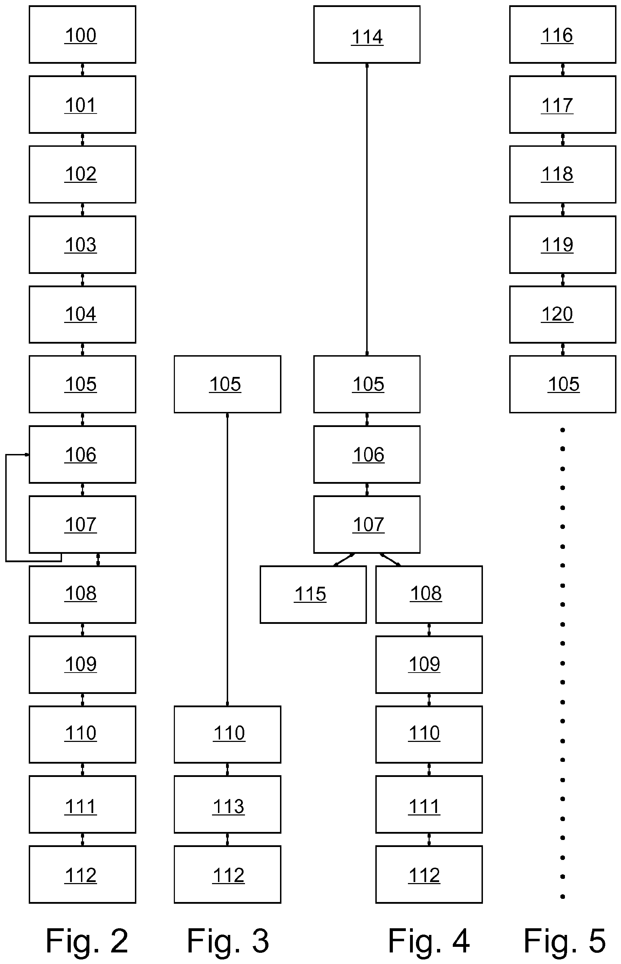

In der Fig. 2 sind die Schritte eines Ablaufs eines Zugriffs einer mobilen Bedieneinheit auf ein Feldgerät dargestellt.

Im Schritt 100 wird am Feldgerät über eine Eingabevorrichtung ein Zugriffs-Code vorgegeben und im Feldgerät fest hinterlegt. Dabei wird beispielsweise sichergestellt, dass dieser Code nachträglich nicht mehr geändert werden kann.

Im Schritt 101 wird die Schnittstelle entsperrt, über die eine Datenkommunikation zwischen dem Feldgerät und einer mobilen Bedieneinheit realisiert werden kann. Das Entsperren ist möglich, da über die Abfrage der Zugangsdaten sichergestellt werden kann, dass der Zugriff auf das Feldgerät nur einem auserwählten Kreis an Personen bzw. nur über vertrauenswürdige mobile Bedieneinheiten möglich ist.

Im Schritt 102 wird auf der mobilen Bedieneinheit ein Anwendungsprogramm - ein App - aktiviert.

Das Anwendungsprogramm ist dabei in einer Ausgestaltung ein selbständiges Programm, also ein sogenanntes Stand-Alone App. In einer anderen Ausgestaltung ist das Anwendungsprogramm eine Komponente eines anderen Programms. Insgesamt dient das Anwendungsprogramm dem autorisierten Zugriff der mobilen Bedieneinheit auf das Feldgerät.

Über das im Schritt 102 aktivierte Anwendungsprogramm wird der im Schritt 100 vorgegebene Zugriffs-Code des Feldgeräts im Schritt 103 auf der mobilen Bedieneinheit eingegeben und im Schritt 104 in der mobilen Bedieneinheit abgespeichert. Daher kann die mobile Bedieneinheit in einer Variante selbsttätig auf das jeweilige Feldgerät zugreifen.

Alternativ entfällt Schritt 104 und der Zugriffs-Code des Feldgeräts muss jeweils für den Zugriff auf das Feldgerät direkt an der mobilen Bedieneinheit eingegeben werden.

Im Schritt 105 wird die mobile Bedieneinheit so in die Nähe des Feldgeräts gebracht, so dass eine Datenübertragung zwischen beiden möglich ist.

Die Kommunikation erfolgt dabei beispielsweise über Verwendung eines WLANs oder einer Wi-Fi- oder Bluetooth-Verbindung, wobei ggf. auch Teile der Übertragungsstrecke mit Protokollen der Industrie-Anwendung und speziell der Prozessautomatisierung überquert werden.

Im Schritt 106 findet ein Verbindungsaufbau zwischen der mobilen Bedieneinheit und dem Feldgerät statt. Bei einer Bluetooth-Verbindung wird dies als Pairing bezeichnet. Ein direkter Eingriff der mobilen Bedieneinheit auf das Feldgerät wird dabei noch nicht gewährt.

Zudem übermittelt die mobile Bedieneinheit Zugriffsdaten an das Feldgerät. Diese Zugriffsdaten bestehen dabei zumindest aus dem dem Feldgerät zugeordneten Zugriffs-Code, der hier in Schritt 104 in der mobilen Bedieneinheit abgespeichert worden ist.

Im Schritt 107 vergleicht das Feldgerät die empfangenden Zugriffsdaten mit dem dem Feldgerät zugeordneten Zugriffs-Code.

Bei einer Abweichung erfolgt hier ein Rücksprung zu Schritt 106, so dass die Bedienperson bzw. die mobile Bedieneinheit eine weitere Möglichkeit hat, die richtigen Zugriffsdaten einzugeben.

Bei einer Übereinstimmung, d. h. in dem Fall, dass die übermittelten Zugangsdaten zumindest den Zugriffs-Code beinhalten, wird im Schritt 108 der mobilen Bedieneinheit der Zugriff auf das Feldgerät erlaubt.

Daran anschließend übermitteln im Schritt 109 die mobile Bedieneinheit und das Feldgerät sich gegenseitig weitere Kommunikationsdaten.

Als Teil des Pairing bzw. hier als besonderer Schritt 110 übermittelt die mobile Bedieneinheit ihren Identifizierungs-Code, z. B. in Form einer ihr eindeutig zugeordneten ID, an das Feldgerät.

Der Identifizierungs-Code wird für zukünftige Zugriffe der mobilen Bedieneinheit auf das Feldgerät im Schritt 111 im Feldgerät abgespeichert.

Im Schritt 112 findet die eigentliche Kommunikation zwischen der mobilen Bedieneinheit und dem Feldgerät statt. Dies ist beispielsweise das Einspielen von Parametern oder Software in das Feldgerät oder das Auslesen von Mess- oder Historiendaten aus dem Feldgerät.

Für eine andere mobile Bedieneinheit würde im Folgenden der Ablauf bei Schritt 105 beginnen, da die Vorgabe des Zugriffs-Codes für das Feldgerät entsprechend nicht mehr erforderlich bzw. vorzugsweise auch nicht mehr möglich ist.

In der Fig. 3 ist eine weitere sich an den ersten Teil des Ablaufs in der Fig. 2 anschließende Kontaktaufnahme zwischen dem Feldgerät und der mobilen Bedieneinheit, die insbesondere für den Ablauf der Fig. 2 verwendet wurde, dargestellt.

Im Schritt 105 wird die erforderliche Nähe zwischen der mobilen Bedieneinheit und dem Feldgerät erzeugt, woraufhin im Schritt 110 die mobile Bedieneinheit ihren Identifizierungs-Code als Zugangsdaten an das Feldgerät übermittelt.

Die Daten oder der Code - unabhängig davon, ob Zugriffs- oder Identifizierungs-Code - können dabei allgemein aus einer Mehrzahl an vorzugweise alphanumerischen Zeichen bestehen. Es kann sich jedoch in einer Variante auch nur um ein Zeichen und daher auch nur um ein Zugangsdatum handeln.

Im Schritt 113 vergleicht das Feldgerät den empfangenen Identifizierungs-Code mit den Daten, die bei der vorhergehenden Kontaktaufnahme zwischen dem Feldgerät und der mobilen Bedieneinheit bzw. bei dem allerersten gesicherten Zugriff - siehe Fig. 2 - hinterlegt worden sind, und erzeugt damit ein Vergleichsergebnis.

Ausgehend von diesem Vergleichsergebnis erlaubt das Feldgerät im Fall eines positiven Vergleichs den Zugriff und damit vorzugsweise auch den Datentransfer zwischen der mobilen Bedieneinheit und dem Feldgerät im Schritt 112.

Der Vorteil dieser Variante ist, dass sich die mobile Bedieneinheit als sich selbst ausweist und dass daher aufgrund einer vorhergehenden Datenkommunikation bereits überprüft werden kann, ob der Zugriff auf das Feldgerät zulässig ist.

In der Fig. 4 ist ein zur Variante der Fig. 3 alternativer Ablauf der Einleitung einer gesicherten Kommunikation zwischen einem Feldgerät und einer mobilen Bedieneinheit dargestellt.

Im Schritt 114 erhält eine mobile Bedieneinheit den Zugriffs-Code von einer Verwaltungsvorrichtung, die beispielsweise ein Server ist.

Daran anschließend nähert sich die Bedienperson mit ihrer mobilen Bedieneinheit im Schritt 105 so weit dem Feldgerät, dass eine Datenkommunikation aufgrund der technischen Gegebenheiten möglich ist. Dies hängt davon ab, ob nur eine direkte Verbindung zwischen dem Feldgerät und der mobilen Bedieneinheit stattfinden soll oder ob auch andere Geräte zur Datenübertragung dazwischen geschaltet werden.

Es folgt im Schritt 106 die Übermittlung der Zugangsdaten von der mobilen Bedieneinheit an das Feldgerät. Diese Zugangsdaten sind dabei vorzugweise diejenigen, die im Schritt 114 von der Verwaltungsvorrichtung der mobilen Bedieneinheit zur Verfügung gestellt worden sind.

Im Schritt 107 findet wieder der Vergleich der empfangenen Zugangsdaten mit den im Feldgerät hinterlegten Daten statt, wobei hier im Fall eines negativen Vergleichsergebnisses im Schritt 115 ein Alarm ausgelöst wird.

Im Fall des positiven Ergebnisses, also der Übereinstimmung zwischen den von der mobilen Bedieneinheit übermittelten und den im Feldgerät hinterlegten Daten, wird im Schritt 108 der mobilen Bedieneinheit der Zugriff der Zugriff zum Feldgerät erlaubt und es folgt der Ablauf wie in Fig. 2.

Eine Variante zur Ausgestaltung gemäß der Fig. 2 in Bezug auf die Vorgabe des Zugriffs-Codes des Feldgeräts zeigt die Fig. 5. Das Feldgerät kann dabei insbesondere auch ohne eine eigene Eingabevorrichtung ausgestaltet sein.

Dem Feldgerät ist in dieser Variante der Fig. 5 noch kein Zugriffs-Code zugewiesen worden.

Daher ist auch die Schnittstelle zur Datenkommunikation - hier einer Funkschnittstelle zur kabellosen Kommunikation mit einer mobilen Bedieneinheit - so konfiguriert, dass zwar grundlegend ein Datenaustausch, z. B. in Form des sogenannten Pairing, also des Austauschs der für eine Datenkommunikation erforderlichen Parameter usw., möglich ist, dass aber nicht tiefer auf die eigentlichen Daten des Feldgerätes, wie z. B. Messdaten, Historiendaten, Mess- oder Steuerparameter oder Teile von Soft- oder Firmware, zugegriffen werden kann.

Im ersten Schritt 116 wird die mobile Bedieneinheit in die Nähe des Feldgerätes gebracht.

Dabei kann bei der Vorgabe des Zugriffs-Codes auch vorgesehen sein, dass eine direkte Verbindung, z. B. über eine Service-Schnittstelle im Feldgerät erzeugt wird oder dass z. B. eine Plombe oder ein als Siegel dienendes Klebeetikett am Feldgerät zerstört wird.

Ist die Datenkommunikation physikalisch möglich, so wird auf der mobilen Bedieneinheit im Schritt 117 ein Anwendungsprogramm gestartet, das speziell die Vorgabe von Zugriffs-Codes erlaubt.

Im Schritt 118 erfolgt die Eingabe des - damit zukünftig gültigen - Zugriffs-Codes des Feldgeräts an der mobilen Bedieneinheit.

Die Bedienungsperson gibt also beispielsweise die Folge von Zahlen und Buchstaben über eine reale oder virtuelle Tastatur der mobilen Bedieneinheit ein.

Im Schritt 119 wird dieser Zugriffs-Code von der mobilen Bedieneinheit an das Feldgerät übermittelt und dort im Schritt 120 abgespeichert.

Da nun ein den berechtigen Zugriff sichernder Zugriffs-Code vorhanden und daher der Zugriff auf das Feldgerät gesichert ist, wird in diesem Schritt 120 auch die angesprochene Schnittstelle des Feldgeräts prinzipiell für den tieferen Zugriff auf das Feldgerät frei geschaltet.

Im Folgenden findet wieder ab Schritt 105 der in der Fig. 2 dargestellte Ablauf statt (für die Übersichtlichkeit sind hier nur Punkte gesetzt).

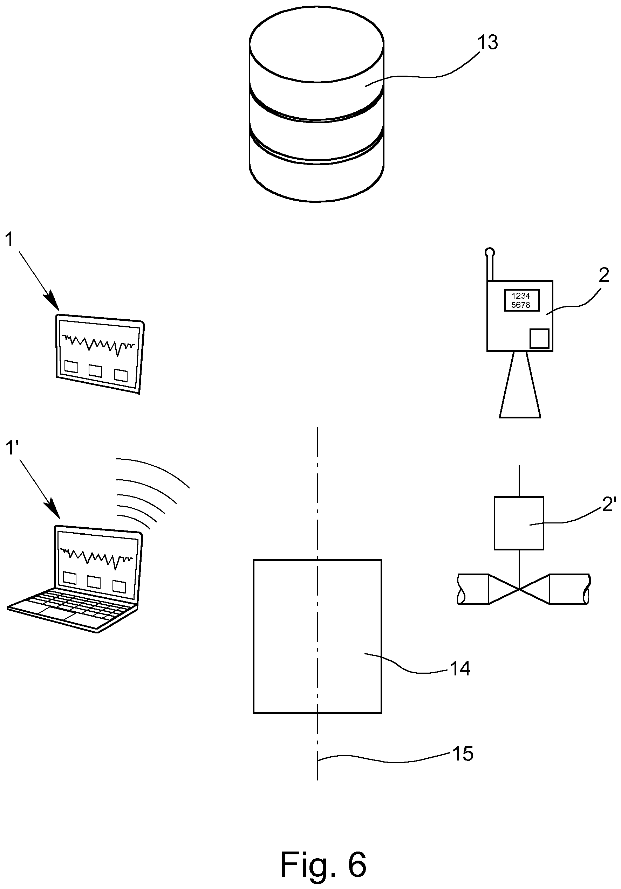

In der Fig. 6 sind zwei Feldgeräte 2, 2' (einmal ein Messgerät - also ein Sensor - und einmal ein Stellglied - also ein Aktor - ) und zwei mobile Bedieneinheiten 1, 1' (einmal in Form eines Tablets und einmal in Form eine Laptops) vorhanden.

Zusätzlich ist auch eine Übertragungsvorrichtung 14 dargestellt, die die Datenkommunikation bzw. die sichere Abtrennung zwischen den zwei Anwendungsbereichen Consumer-Elektronik (hier linke Seite) von der Industrie- bzw. Prozessautomatisierungs-Elektronik (hier rechte Seite) realisiert.

In einer weiteren - hier nicht dargestellten - Ausgestaltung ist die Übertragungsvorrichtung 14 über eine Leitung mit dem unteren Feldgerät 2' verbunden.

In einer anderen - ebenfalls nicht dargestellten - Ausgestaltung ist die Übertragungsvorrichtung 14 direkt mit dem Feldgerät 2' verbunden und befindet sich beispielweise in einem gemeinsamen Gehäuse.

Um anzudeuten, dass die verwendeten Gerätschaften, üblichen Protokolle und Sicherheitsmechanismen sich durchaus voneinander unterscheiden, ist eine Grenze 15 vorgesehen.

Umgekehrt bedeutet dies, dass für die Anwendungen im Bereich der Prozessautomatisierung mit den Feldgeräten auch mobile Bedieneinheiten aus dem Verbrauer-Bereich verwendet werden können.

Die mobilen Bedieneinheiten 1, 1' sind dabei derartig ausgestaltet, dass sie über die Verwaltungsvorrichtung 13 oder direkt miteinander Zugriffs-Codes für unterschiedliche Feldgerät untereinander austauschen.

Alternativ oder ergänzend erhalten auch die Feldgeräte 2, 2' - hier beispielsweise über die Verwaltungsvorrichtung 13 - die Identifizierungs-Codes der mobilen Bedieneinheiten 1, denen ein Zugang gewährt werden darf.

Auf den mobilen Bedieneinheiten 1, 1' und auch bei der Verwaltungsvorrichtung 13 werden hier Verfahren, Methoden und Programme aus dem Anwendungsbereich der IT der Verbraucherwelt genutzt.

In einer Variante scannen die mobilen Bedieneinheiten 1, 1' das Netzwerk, das sich insbesondere durch die Gerätschaften in ihrer funktechnischen Nähe ergibt, auf Feldgeräte 2, 2' bzw. andere mobile Bedieneinheiten 1, 1' ab, mit denen eine Verbindung möglich ist und für die ggf. die erforderlichen Zugriffsdaten vorhanden sind bzw. geladen werden müssen.

## Patentansprüche

1. Verfahren zum gesicherten Zugriff mindestens einer mobilen Bedieneinheit (1) auf mindestens ein Feldgerät (2), wobei mindestens zwischen der mobilen Bedieneinheit (1) und dem Feldgerät (2) eine Verbindung zur Übertragung von Daten aufgebaut wird, wobei Zugangsdaten für einen Zugriff der mobilen Bedieneinheit (1) auf das Feldgerät (2) übermittelt werden, wobei ein Vergleich zwischen den Zugangsdaten und hinterlegten Vergleichsdaten vorgenommen und ein Vergleichsergebnis erzeugt wird, wobei ausgehend von dem Vergleichsergebnis der Zugriff der mobilen Bedieneinheit (1) auf das Feldgerät (1) erlaubt wird, wobei für einen Zugriff auf das Feldgerät (2) dem Feldgerät (2) mindestens ein Zugriffs-Code zugeordnet und zumindest als Teil der Vergleichsdaten hinterlegt wird und wobei der mobilen Bedieneinheit (1) ein Identifizierungs-Code zugeordnet und zumindest als Teil der Vergleichsdaten hinterlegt wird und dass der Identifizierungs-Code zumindest als Teil der Zugangsdaten übermittelt wird
**dadurch gekennzeichnet,**
**dass** der Identifizierungs-Code in dem Fall zumindest als Teil der Vergleichsdaten hinterlegt wird, dass das Vergleichsergebnis, das für den Vergleich zwischen von der mobilen Bedieneinheit (1) übermittelten Zugangsdaten und dem hinterlegten Zugriffs-Code erzeugt worden ist, positiv ist und dass bei einem erneuten Zugriff nur der Identifizierungs-Code von der mobilen Bedieneinheit (1) an das Feldgerät (2) übermittelt wird und sogleich vom Feldgerät (2) aufgrund der hinterlegten Daten als vertrauenswürdig erkannt und der Zugriff erlaubt wird.

2. Verfahren nach Anspruch 1, **dadurch gekennzeichnet, dass** in der mobilen Bedieneinheit (1) Zugriffs-Codes von mindestens zwei Feldgeräten (2, 2') hinterlegt werden und dass von der mobilen Bedieneinheit (1) die in ihr hinterlegten Zugriffs-Codes mit einer anderen mobilen Bedieneinheit (1') geteilt werden.

3. Verfahren nach Anspruch 1 oder 2, **dadurch gekennzeichnet, dass** von der mobilen Bedieneinheit (1) zumindest die Feldgeräte (2, 2') ermitteln werden, auf die ein Zugriff erfolgen kann, und dass von einer anderen mobilen Bedieneinheit (1') und/oder von einer Verwaltungsvorrichtung (13) erforderliche Zugriffs-Codes der ermittelten Feldgeräte (2, 2') abgefragt werden.

4. Verfahren nach einem der Ansprüche 1 bis 3, **dadurch gekennzeichnet, dass** das Hinterlegen und/oder das Teilen von Zugriffs-Codes und/oder Identifizierungs-Codes und/oder dass der Vergleich von Zugangsdaten mit hinterlegten Vergleichsdaten zumindest teilweise oder vollständig von einer Verwaltungsvorrichtung (13) vollzogen wird.

## Claims

1. Method for safe access of at least one mobile control unit (1) to at least one field device (2), wherein a connection for transmitting data is established at least between the mobile control unit (1) and the field device (2), wherein access data for access of the mobile control unit (1) is transmitted to the field device (2), wherein a comparison is made between the access data and stored comparison data and a comparison result is generated, and that access of the mobile control unit (1) to the field device (1) is permitted based on the comparison result, wherein at least one access code is assigned to the field device (2) for access to the field device (2) and the access code is stored as at least a part of the comparison data, wherein an identification code is assigned to the mobile control unit (1) and is stored as at least a part of the comparison data and that the identification code is transmitted as at least a part of the access data,
**characterized in**
**that** the identification code is stored as at least a part of the comparison data in this case, that the comparison result that was generated for the comparison of the access data transmitted by the mobile control unit (1) and the stored access code is positive and that by re-access, only the identification code is transmitted from the mobile control unit (1) to the field device (2) and is directly identified by the field device (2) as trustworthy due to the stored data and access is granted.

2. Method according to any claim 1, **characterized in that** access codes from at least two field devices (2, 2') are stored in the mobile control unit (1) and that the access codes stored in the mobile control unit (1) are shared by the mobile control unit (1) with another mobile control unit (1').

3. Method according to claim 1 or 2, **characterized in that** at least the field devices (2, 2') that can be accessed are identified by the mobile control unit (1), and that necessary access codes of the identified field devices (2, 2') are retrieved by another mobile control unit (1') and/or by an administrator device (13).

4. Method according to any one of claims 1 to 3, **characterized in that** the storing and/or sharing of access codes and/or identification codes and/or that the comparison of access data with with stored comparison data is executed at least partially or completely by an administrator device (13).

## Revendications

1. Procédé d'accès sécurisé d'au moins une unité de commande mobile (1) à au moins un appareil de terrain (2), une liaison servant à la transmission de données étant établie au moins entre l'unité de commande mobile (1) et l'appareil de terrain (2), des données d'accès pour un accès de l'unité de commande mobile (1) à l'appareil de terrain (2) étant communiquées, une comparaison entre les données d'accès et des données comparatives stockées étant effectuée et un résultat de comparaison étant généré, l'accès de l'unité de commande mobile (1) à l'appareil de terrain (2) étant permis à partir du résultat de comparaison, au moins un code d'accès étant attribué à l'appareil de terrain (2) pour un accès à l'appareil de terrain (2) et étant stocké au moins en tant que partie des données comparatives et un code d'identification étant attribué à l'unité de commande mobile (1) et étant stocké au moins en tant que partie des données comparatives et le code d'identification étant communiqué au moins en tant que partie des données d'accès,
**caractérisé en ce**
**que** le code d'identification est stocké au moins en tant que partie des données comparatives dans le cas où le résultat de comparaison, qui a été généré pour la comparaison entre les données d'accès communiquées par l'unité de commande mobile (1) et le code d'accès stocké, est positif et **en ce que** lors d'un nouvel accès, seul le code d'identification est communiqué par l'unité de commande mobile (1) à l'appareil de terrain (2) et aussitôt reconnu par l'appareil de terrain (2) comme étant digne de confiance sur la base des données stockées et l'accès est autorisé.

2. Procédé selon la revendication 1, **caractérisé en ce que** les codes d'accès d'au moins deux appareils de terrain (2, 2') sont stockés dans l'unité de commande mobile (1) et **en ce que** les codes d'accès stockés dans l'unité de commande mobile (1) sont partagés par celle-ci avec une autre unité de commande mobile (1').

3. Procédé selon la revendication 1 ou 2, **caractérisé en ce qu'**au moins les appareils de terrain (2, 2') auquel un accès peut avoir lieu sont déterminés par l'unité de commande mobile (1), et **en ce que** les codes d'accès nécessaires des appareils de terrain (2, 2') déterminés sont interrogés par une autre unité de commande mobile (1') et/ou par un dispositif de gestion (13) .

4. Procédé selon l'une des revendications 1 à 3, **caractérisé en ce que** le stockage et/ou le partage des codes d'accès et/ou des codes d'identification et/ou **en ce que** la comparaison des données d'accès avec les données comparatives stockées est accompli(e) au moins partiellement ou entièrement par un dispositif de gestion (13).
